# EUROPEAN PATENT APPLICATION

(11) **EP 3 376 444 A1**
(43) Date of publication of application: **19.09.2018**
(21) Application number: 18161454.6
(22) Date of filing: 13.03.2018
(51) Int. Cl.: G06Q 10/02

(54) **SYSTEMS AND METHODS FOR TAGGING PASSENGER BAGGAGE**

(30) Priority: 14.03.2017 US 201762471042 P; 06.03.2018 US 201815912873
(71) Applicant: Hand Held Products, Inc., Fort Mill, SC 29707 (US); Soderberg, Urban, Morris Plains, NJ 07950 (US); Forsberg, Martin, Morris Plains, NJ 07950 (US)
(72) Inventor: SODERBERG, Urban, Morris Plains, NJ New Jersey 07950 (US); FORSBERG, Martin, Morris Plains, NJ New Jersey 07950 (US)
(74) Representative: Houghton, Mark Phillip

(57) **Abstract**

A system for tagging passenger baggage can include an indicia-reading device for reading decodable indicia associated with a boarding pass issued to a passenger, decoding the decodable indicia into a decoded message comprising boarding pass and baggage information for the passenger, and transmitting information of the decoded message. The system can also include a printer in communication with the indicia-reading device configured to receive the information of the decoded message transmitted from the indicia-reading device, and generate a baggage tag for baggage of the passenger based upon information of the decoded message received from the indicia-reading device.

## Description

### CROSS-REFERENCE TO RELATED APPLICATION

This application claims the benefit of United States Provisional Patent Application Serial No. 62/271,042 filed on March 14, 2017, the entire contents of which are incorporated herein by reference.

### FIELD OF THE INVENTION

The present invention relates to passenger baggage tagging systems and, more specifically, to systems and related methods for generating baggage-tags for attachment to passenger baggage.

### BACKGROUND

Airports are typically crowded with passengers, especially during peak operating hours. There exists an ever-increasing need for simplified, cost-efficient, baggage-tagging and bag-drop solutions to process the influx of passengers. At present, however, the possibilities for adding or increasing capacity in this respect are expensive and complex. For instance, the process for having a baggage-tag printed at an airline check-in counter or at a self-service kiosk (if available) includes several steps, and lines can backup due to the time required for performing these steps on the limited existing equipment.

Baggage-tags, or bag-tags, are traditionally printed at airports on dedicated equipment connected to (*e.g.,* in electronic communication with) a Departure Control Systems (DCS). A DCS automates processing for an airline's airport management operation, which includes managing the information required for airport check-in, issuing boarding passes, baggage tagging/acceptance, boarding processes, load control, aircraft check, and other related activities.

The DCS is also typically in communication with an airport Baggage Handling System (BHS). A BHS is a system (*e.g.,* including conveyors, transports, bag-drop points, etc.) that accepts checked-in/tagged baggage or luggage for processing (*e.g.,* scanning baggage-tags for dropped luggage, tracking the baggage, screening the baggage, confirming transport to the correct location, etc.). The overall quality of bag-tag labels and associated printed barcodes is maintained and safeguarded to ensure acceptable read-rates and success in the baggage handling process.

The DCS solution for generating baggage-tags (*e.g.,* at an airline check-in counter or kiosk) has various shortcomings. For instance, the solution is expensive to implement on a per-position basis as the integration presents technical and commercial complexity.

Currently, many passengers pre-print their boarding pass prior to arriving at the airport, or obtain an electronic boarding pass on their mobile phone or other electronic device (*e.g.,* tablet computer, smart watch, NFC-enabled mobile device, etc.). Boarding pass data is generally stored on the pass in the form of a 2D boarding pass barcode. Even so, passengers must still have bag-tag labels printed for checked baggage and drop their baggage for processing, which necessitates use of devices/systems connected to a DCS.

Recently, some airlines have begun offering travelers the option to pre-print baggage labels on standard printers (*e.g.,* at home using A4 or letter-size paper). Plastic folders are provided for use with the self-printed labels. The printed paper is folded to create a similar form-factor to standard bag-tag labels, and placed into the plastic folder. This option, however, presents potential downstream processing issues (*e.g.,* reduced read rates by a BHS).

Baggage processing problems can result, for example, when printers (*e.g.,* home-based consumer printers) have print quality issues (*e.g.,* generating images that are faded), when printers do not print properly (*e.g.,* misaligned images), or when the plastic folders provided by the airlines get scratched or are otherwise damaged. Various regulatory restrictions also limit the wide-spread deployment of self-printed bag-tags.

Another problem with self-printed bag-tags relates to the timing of issuance. Baggage-tags generated closer to flight time (*e.g.,* within four hours thereof) increase the chance of the passenger being provided with an accurate, up-to-date, bag-tag.

Other exemplary limitations of existing systems for passenger self-printed bag-tags include: (*i*) the data size of the bag-tag print images which are generated/provided for use exceed the capacity available in the International Air Transport Association (IATA) standard for boarding pass 2D-barcodes; (*ii*) the bag-tag print images which are generated/provided for use cannot be loaded into or onto the passenger's boarding pass; (*iii*) the passenger is required to be on-line (*e.g.,* in communication with an airline host system, DCS, etc.) and have a working/effective printer available to generate baggage-tag labels; and (*iv*) the unwillingness of some passengers to utilize their available printers (*e.g.,* consumer-grade printers located at personal residence) for generating an airline bag-tag, preferring the assurance provided by a "proper" bag-tag label generated on reliable, standardized, commercial-quality equipment (*e.g.,* at an airline check-in counter).

Therefore, a need exists for improved, cost-efficient systems and methods for generating baggage-tags, including but not limited to baggage-tagging systems that can print baggage-tag labels without being connected to an airline host or DCS, that can reliably provide high-quality, IATA compliant, bag-tag labels, and that can be deployed in numerous settings for issuing standardized bag-tags (*e.g.,* at an airport, hotel, company facility, etc.).

### SUMMARY

Accordingly, in one aspect, the present invention embraces a method that includes reading, via an indicia-reading device, decodable indicia associated with a boarding pass of a passenger. In response to reading the decodable indicia, decoding the decodable indicia into a decoded message, the decoded message including boarding pass and baggage information for the passenger. In response to decoding the decodable indicia into the decoded message, transmitting information of the decoded message to a printer in communication with the indicia-reading device, and, in response to receiving the transmitted information of the decoded message, generating a baggage tag via the printer based, in part, upon at least a portion of the received information of the decoded message.

In an exemplary embodiment, the step of generating the baggage tag comprises printing the baggage tag on a label for attachment to baggage of the passenger.

In another exemplary embodiment, the indicia-reading device and the printer are not in electronic communication with a Departure Control System for an airline and/or airport.

In yet another exemplary embodiment, the decodable indicia is an image of a 2D barcode on a printed or electronic boarding pass.

In yet another exemplary embodiment, the decoded message comprises information including number of bags for the passenger, baggage license plate numbers, and baggage routing instruction.

In yet another exemplary embodiment, the indicia-reading device is an NFC-enabled indicia-reading device, and wherein the boarding pass is an electronic boarding pass on an NFC-enabled mobile device.

In another aspect, the present invention embraces a method that includes capturing, via an indicia-reading device, an image of a boarding pass for a passenger including decodable indicia. In response to capturing the image, locating the decodable indicia within the image. In response to locating the decodable indicia, decoding the decodable indicia into a decoded message, wherein the decoded message comprises boarding pass and baggage information associated with the passenger. In response to decoding the decodable indicia into the decoded message, transmitting information of the decoded message to a printer in electronic communication with the indicia-reading device, and printing, via the printer, a baggage tag for attachment to baggage of the passenger based, in part, upon at least a portion of the information of the decoded message received from the indicia-reading device.

In an exemplary embodiment, the indicia-reading device and the printer are not in electronic communication with a Departure Control System for an airline and/or airport.

In another exemplary embodiment, the decodable indicia is a 2D barcode and the boarding pass is a printed or electronic boarding pass.

In yet another exemplary embodiment, the decoded message comprises information including number of bags for the passenger, baggage license plate numbers, and baggage routing instructions.

In yet another exemplary embodiment, the printer is connected to a local and/or remote server, and wherein the printer is configured to send data to, and receive data from, the local and/or remote server.

In yet another aspect, the present invention embraces a system that includes an indicia-reading device for (*i*) reading decodable indicia associated with a boarding pass issued to a passenger, (*ii*) decoding the decodable indicia into a decoded message comprising boarding pass and baggage information for the passenger, and (*iii*) transmitting information of the decoded message; and a printer in communication with the indicia-reading device that is configured to (*i*) receive the information of the decoded message transmitted from the indicia-reading device, and (*ii*) generate a baggage tag for baggage of the passenger based, in part, upon at least a portion of the information of the decoded message received from the indicia-reading device.

In an exemplary embodiment, printer is a thermal printer configured for printing the baggage tag on a label for attachment to baggage of the passenger.

In another exemplary embodiment, the printer is configured to encode an RFID baggage tag for baggage of the passenger.

In yet another exemplary embodiment, the printer is configured to generate the baggage tag without being communicatively coupled to an airline Departure Control System (DCS) .

In yet another exemplary embodiment, the decodable indicia is a 2D barcode on a printed or electronic boarding pass.

In yet another exemplary embodiment, the decoded message comprises information including number of bags for the passenger, baggage license plate numbers, and baggage routing information.

In yet another exemplary embodiment, the system is implemented in an airport and/or a hotel.

In yet another exemplary embodiment, the printer is connected to a local and/or remote server, and wherein the printer is configured to send data to, and receive data from, the local and/or remote server.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Fig. 1 schematically depicts an exemplary environment/system for implementing an exemplary passenger baggage tagging system.
Fig. 2 schematically depicts exemplary information encoded within decodable indicia during virtual tagging.
Fig. 3 schematically depicts certain components of an exemplary baggage-tagging system.
Fig. 4 is a flow chart illustrating an exemplary method for generating a baggage-tag.

### DETAILED DESCRIPTION

The present invention embraces systems and related methods for generating baggage-tags for attachment to baggage of a passenger. Although described herein with primary reference to airline usage, the disclosed embodiments may be applicable in other settings where baggage/luggage is handled for processing (*e.g.,* maritime, railways, busing, etc.).

Embodiments of the present disclosure provide a unique, cost-efficient solution for the worldwide airline market. Airlines and airports can deploy the exemplary systems (*e.g.,* "scan2tag" systems) for generating IATA approved baggage-tags in numerous locations without having to connect to a DCS and/or airline host system and, in some cases, the internet or other network. This allows airlines/airports to improve passenger processing and improve capacity. Passenger satisfaction can also be increased due to reduced wait times (*e.g.,* reducing processing times at the airport down to a few minutes or seconds).

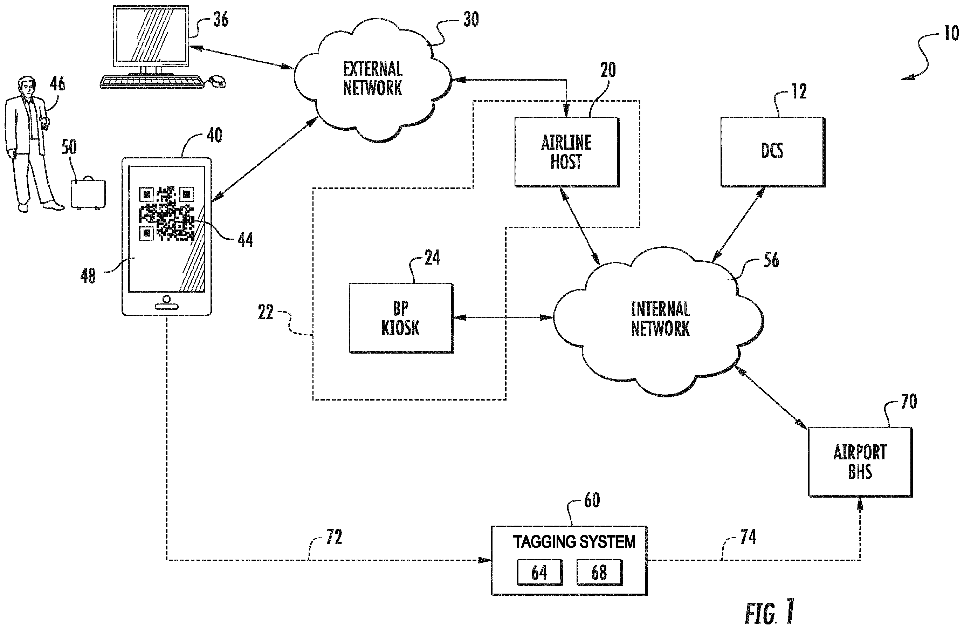

An exemplary environment/system 10 for implementing a passenger baggage tagging system of the present disclosure is schematically depicted in Fig. 1. The environment 10 may include a departure control system (DCS) 12 embracing a host computing system and associated database(s) for maintaining information needed for managing airport operations (e.g., information regarding flights, passengers, baggage, etc.). The DCS 12 may maintain information for one or more airlines. For simplicity, Fig. 1 illustrates DCS 12 in communication with a single, airline-specific host system 20 via an airport internal network 56.

The airline host 20 may include a computing system and associated airline-specific database(s) for maintaining information relating to airline operations. The airline host system 20 of Fig. 1 includes an associated passenger check-in system 22 located at the airport. The airline-associated check-in system 22 may include a number of boarding pass (BP) kiosks 24 (only one explicitly shown) having printers for printing boarding passes. Existing airline systems further include a number of check-in counters at the airport for issuing/generating passenger boarding passes and baggage-tags (not explicitly shown).

The airline-specific host 20 may also provide access to passengers 46 or other individuals using third-party computing systems such as a personal computer 36, mobile phone 40 (*e.g.,* smartphone working as a small computer), or other electronic device (*e.g.,* tablet computer, smart watch, NFC-enabled mobile device, etc.) via an external network 30 such as the internet or worldwide web portion of the internet. Passengers may self-print their boarding pass prior to arriving at the airport (*e.g.,* on a personal computer 36 having an associated printer), or obtain an electronic boarding pass on their mobile phone 40 or other electronic device (with boarding pass data stored in the form of a 2D boarding pass barcode).

The systems of the present disclosure may be configured for virtual baggage-tagging during passenger check-in whereby a machine-decodable indicium 44 (*e.g.,* a 2D barcode) including boarding pass as well as baggage information for baggage 50 of the passenger 46 is generated onto the boarding pass 48 carried by passenger 46. For example, baggage 50 information (*e.g.,* number of checked bags) may be entered during an online airline check-in process. Significantly, embodiments of the present disclosure provide a system for generating an image of decodable indicia that includes (*e.g.,* encodes) boarding pass as well as passenger baggage information so that upon scanning or reading the decodable indicia the relevant information can be obtained for use in generating bag-tags.

The term "barcode" as used herein refers to any item and/or image containing decodable indicia, including but not limited to a 1D bar code, a 2D bar code, one or more optical character recognition (OCR) symbols, NFC data carriers, and/or RFID. The 2D bar code symbology used as the airline industry's bar-coded boarding pass standard (BCBP) for printed boarding passes is PDF417. Additional barcode symbology used for electronic boarding passes (*e.g.,* in mobile apps) include Aztec and QR Code. Although the present embodiments are primarily described in relation to barcodes that are read or scanned using an optical indicia-reader (*e.g.,* a scanner), other variations and modifications are disclosed, and more will be apparent to those skilled in the art in view of the present disclosure.

Notably, in some embodiments, the symbology of decodable indicia 44 may be based on existing IATA standards for 2D barcoded printed boarding passes (*e.g.,* pre-printed on a printer associated with personal computer 36, printed at the airport on kiosk 24, etc.), or on an electronic boarding pass 48 for the passenger 46 displayed on their mobile phone 40 (*e.g.,* generated based on an airline's online check-in process). In this respect, all steps of the baggage-tagging process except physical printout of the bag-tag label can be completed at an early stage.

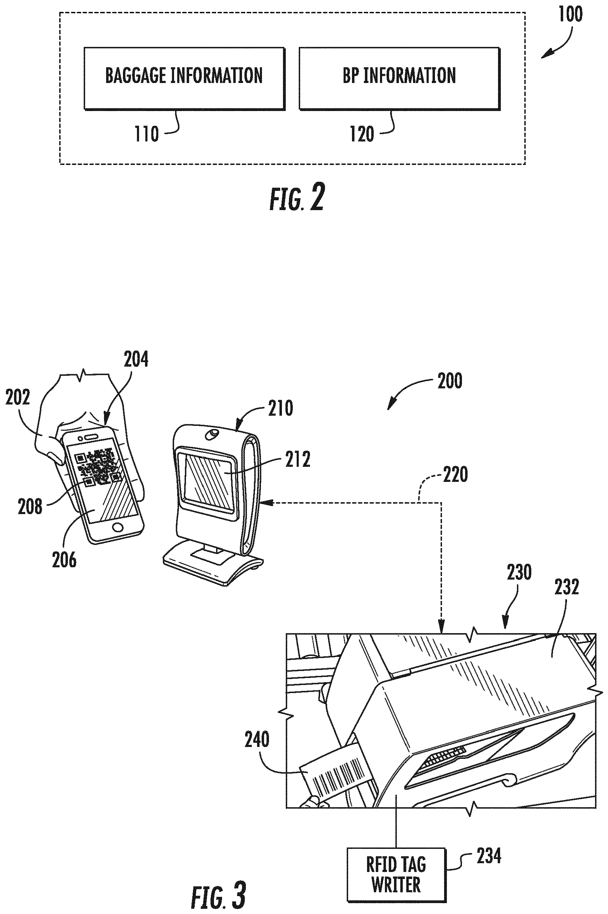

With reference to Fig. 2, exemplary information 100 encoded within a decodable indicium (*e.g.,* decodable indicia 44) during virtual tagging as described above is illustrated. Although some informational parameters for printing or otherwise generating an IATA compliant bag-tag are presently included in a standard 2D barcode for a boarding pass, other necessary parameters are missing. Thus, necessary baggage information parameters 110 including the number of passenger-related bags, bag-tag license plate numbers (*e.g.,* IATA ten (10) digit license plate codes), and baggage routing information or instructions are included, in addition to boarding pass (BP) information 120 for the passenger, within a decodable indicium. The present system may, for example, add the necessary baggage-related data 110 (*e.g.,* less than 100 bytes) into the user field of the IATA standard barcode format.

Therefore, through the virtual tagging process described above, a decodable indicium (*e.g.,* decodable indicia 44) is generated which provides a means for transmitting information 100 so that physical bag-tags or labels can be generated at any location where a tagging system of the present disclosure may be deployed. Thus, exemplary systems of the present disclosure employ images of decodable indicia for communicating information (*i.e.,* visual communication) to provide independent, stand-alone solutions for generating IATA compliant baggage tags.

Once virtual tagging is completed, physical bag-tags can be printed at any location where a tagging system embodiment may be deployed, making the system independent of existing airline infrastructure and systems in this regard. With reference to Fig. 1, the passenger 46 can take the electronic boarding pass 48 bearing the decodable indicia 44 to a baggage-tagging system 60 as illustrated by arrow 72. Although the system 60 may typically be deployed in an airport, systems may also be deployed at other locations for issuing bag-tags including, but not limited to, hotel lobbies, company facilities, transit stations, or other convenient locations for issuing bag-tags.

The exemplary baggage-tagging system 60 includes an indicia-reading device 64 and a printer 68 in communication with the indicia-reading device 64. In some embodiments, the baggage-tagging system 60 may include printer 68 and indicia-reader solutions from Honeywell International Inc. of Morris Plains, New Jersey, such as PM23, PD43, and/or PC43 series thermal printers, and 7580-series scanners.

Fig. 3 schematically depicts certain components of an exemplary baggage-tagging system 200 which may be utilized in the environment 10 illustrated in Fig. 1 (*e.g.,* as a baggage-tagging system 60). As shown, indicia-reader 210 is connected via a communication link 220 (*e.g.,* a wired USB connection, or a wireless digital-data link such as WiFi, BLUETOOTH, etc.) to a thermal printer 230. The indicia-reader 210 interfaces with the printer 230 to exchange information (*e.g.,* information 100) for use by the printer 230 to generate a baggage-tag label 240 for attachment to passenger baggage.

To use the baggage-tagging system 200, a passenger 202 may position a mobile-device 204 displaying electronic boarding pass 206 bearing decodable indicia 208 into the field of view of the indicia-reader 210. The decodable indicia 208 can include boarding pass and baggage information for the passenger 202 (*e.g.,* via virtual tagging). When the mobile device 204 is placed in position, an image of the mobile device's display showing the decodable indicia 208 may be captured or scanned by an indicia-reading system 212 (*e.g.,* including a camera, optical scanning device, etc.) of the indicia-reader 210. The indicia-reader 210 may use a processor running algorithms to locate the decodable indicia 208 within the image and interpret the decodable indicia 208 by decoding the decodable indicia 208 into a decoded message comprising boarding pass and baggage information for the passenger 202. The information of the decoded message or relevant portions thereof may then be transmitted to, and received by, the printer 230.

In other embodiments, the mobile device 204 and the indicia-reader 210 may be NFC-enabled devices configured for transmitting/receiving information via NFC. The electronic boarding pass 206 may be in the form of an NFC-issued boarding pass that includes boarding pass and baggage information for the passenger 202, and the information may be transmitted from the mobile device 204 to the indicia-reader 210 via NFC when the devices are placed in proximity with each other (*e.g.,* within a few centimeters).

The printer 230 may include a processer running application software 232 loaded with one or several bag-tag layouts based on the IATA common use standard (CUSS). The printer application software 232 can use portions of the boarding pass and baggage information (from the barcode 208 or otherwise) to generate baggage tags 240, such as a printed label for attachment to passenger baggage. For example, the bag-tag media 240 may be a twenty-one (21) inch IATA CUSS bag-tag label.

The printer 230 can also be equipped with a RFID writer 234 for generating RFID-based bag-tags that are encoded using portions of the boarding pass and baggage information and provided for attachment to passenger baggage.

In some embodiments, the baggage-tagging system 200 may operate independent of a DCS or other airline network system (*e.g.,* off-line). In other embodiments, the system 200 may be operable to interface with local and/or remote servers (*e.g.,* via wired or wireless connections not explicitly shown) for sending and receiving data relating to tagging operations (*e.g.,* logging and reporting features).

With reference to Fig. 1, after the passenger 46 receives bag-tags from the baggage-tagging system 60, the passenger 46 can then attach the bag-tags onto their luggage (*e.g.,* removing backing and adhering to form a loop around a handle) and take their tagged-baggage to a baggage drop point for handling by an airport BHS 70 as illustrated by arrow 74. In other embodiments, the baggage-tagging system 60 may be located next to drop points when suitable.

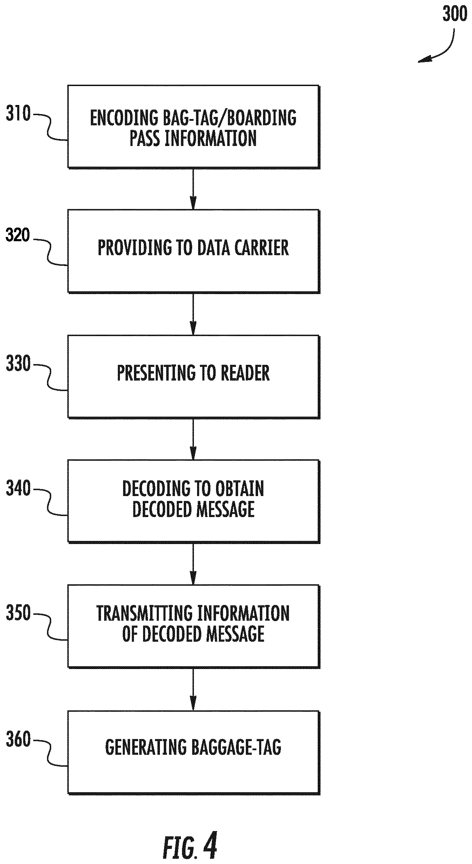

Turning to Fig. 4, a flow chart illustrates an exemplary method 300 for generating baggage-tags (*e.g.,* using systems generally described with reference to Figs. 1-3). At step 310, a virtual tagging process is implemented whereby baggage information is included in decodable indicia such as a 2D barcoded boarding pass for a passenger. For example, step 310 may occur during an airline's online check-in process (*e.g.,* based upon the passenger entering baggage information).

At step 320, the boarding pass including decodable baggage information is provided onto a data carrier. The data carrier can be a mobile phone (or other electronic device) or a paper/printed boarding pass. In some embodiments, the boarding pass may be a NFC boarding pass on a NFC-enabled device.

At step 330, a passenger presents the data carrier to an indicia-reader of a baggage-tagging system of the present disclosure. The reader may include a 2D scanner in electronic communication (*e.g.,* via a USB connection) with a thermal printer.

At step 340, the indicia-reader reads the decodable indicia of the data carrier (*e.g.,* optically via an image capturing system) and decodes the decodable indicia into a decodable message including the baggage and boarding pass information for the passenger.

At step 350, the indicia-reader transmits information of the decoded message to the printer for generating a baggage-tag label.

At step 360, printer receives the boarding pass and baggage information and uses relevant portions of the data to generate baggage-tags, for example, using application software having print layouts based on the IATA CUSS for printing a bag-tag label for attachment to baggage of the passenger.

Embodiments of the present disclosure provide advantages such as allowing an implementation that is transparent to existing systems (*e.g.,* DCS, airports host systems, etc.). Airlines can add parameters needed for baggage tagging into boarding passes (*e.g.,* 2D barcode boarding passes) to achieve a virtual bag-tag, the system reads the boarding pass, and the system generates the bag-tag. This allows airports/airlines to offer self-service bag-tag label print-outs at the airport on a stand-alone solution that can easily be multiplied to meet increased passenger demand. In some embodiments, the system can also be connected (*e.g.,* via WiFi, LAN, etc.) to local servers or into the cloud to receive data or generate reports and feed data upstream in any format needed.

Exemplary implementations include capability for forthcoming boarding pass carrier technologies such as NFC, and for providing RFID bag-tags and/or other bag-tag technologies.

Embodiments of the present disclosure reduce the need for expensive on-line CUSS equipment and its related complexity; enable airports/airlines to increase check-in capacity without adding expensive infrastructure; requires only adding a limited amount of bag-tag related parameters into the boarding pass indicia; and can be deployed offsite at various locations.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

## Claims

1. A method, comprising:
reading, via an indicia-reading device, decodable indicia associated with a boarding pass of a passenger;
in response to reading the decodable indicia, decoding the decodable indicia into a decoded message, the decoded message comprising boarding pass and baggage information for the passenger;
in response to decoding the decodable indicia into the decoded message, transmitting information of the decoded message to a printer in communication with the indicia-reading device; and
in response to receiving the transmitted information of the decoded message, generating a baggage tag via the printer based, in part, upon at least a portion of the received information of the decoded message;
wherein the indicia-reading device and the printer are not in electronic communication with a Departure Control System for an airline and/or airport.

2. The method of claim 1, wherein the step of generating the baggage tag comprises printing the baggage tag on a label for attachment to baggage of the passenger.

3. The method of claim 1, wherein the printer is configured for generating RFID baggage tags, and wherein the step of generating the baggage tag comprises encoding an RFID baggage tag for attachment to baggage of the passenger.

4. The method of claim 1, wherein the decodable indicia is an image of a 2D barcode on a printed or electronic boarding pass.

5. The method of claim 4, wherein the decoded message comprises information including number of bags for the passenger, baggage license plate numbers, and baggage routing instructions.

6. The method of claim 1, wherein the indicia-reading device is an NFC-enabled indicia-reading device, and wherein the boarding pass is an electronic boarding pass on an NFC-enabled mobile device.

7. A system, comprising:
an indicia-reading device for (*i*) reading decodable indicia associated with a boarding pass issued to a passenger, (*ii*) decoding the decodable indicia into a decoded message comprising boarding pass and baggage information for the passenger, and (*iii*) transmitting information of the decoded message; and
a printer in communication with the indicia-reading device;
wherein the printer is configured to (*i*) receive the information of the decoded message transmitted from the indicia-reading device, and (*ii*) generate a baggage tag for baggage of the passenger based, in part, upon at least a portion of the information of the decoded message received from the indicia-reading device.

8. The system of Claim 7, wherein the printer comprises a thermal printer configured for printing the baggage tag on a label for attachment to baggage of the passenger.

9. The system of Claim 8, wherein the printer is configured to encode an RFID baggage tag for baggage of the passenger.

10. The system of Claim 8, wherein the printer is configured to generate the baggage tag without being communicatively coupled to an airline Departure Control System (DCS) .

11. The system of Claim 10, wherein the decodable indicia is a 2D barcode on a printed or electronic boarding pass.

12. The system of Claim 7, wherein the decoded message comprises information including number of bags for the passenger, baggage license plate numbers, and baggage routing information.

13. The system of Claim 7, wherein the system is implemented in an airport and/or a hotel.

14. The system of Claim 7, wherein the printer is connected to a local and/or remote server, and wherein the printer is configured to send data to, and receive data from, the local and/or remote server.
